# EUROPÄISCHE PATENTSCHRIFT

(11) **EP 3 771 368 B1**
(45) Veröffentlichungstag und Bekanntmachung des Hinweises auf die Patenterteilung: **11.09.2024**
(21) Anmeldenummer: 20183498.3
(22) Anmeldetag: 01.07.2020
(51) Int. Cl.: A47J 27/04, A47J 36/32, A47J 27/00

(54) **KÜCHENMASCHINE UND VERFAHREN ZUM DAMPFGAREN EINES NAHRUNGSMITTELS**
KITCHEN APPLIANCE AND METHOD FOR STEAM COOKING A FOOD PRODUCT
ROBOT DE CUISINE ET PROCÉDÉ DE CUISSON À LA VAPEUR D'UN ALIMENT

(30) Priorität: 30.07.2019 DE 102019211291
(43) Veröffentlichungstag der Anmeldung: 03.02.2021
(73) Patentinhaber: BSH Hausgeräte GmbH, 81739 München (DE)
(72) Erfinder: Brinovsek, Luka, 3341 Smartno ob Dreti (SI); Bäcker, Anna, 83301 Traunreut (DE); Blischke, Daniela, 84529 Tittmoning (DE); Brunner, Andreas, 83301 Traunreut (DE)

(56) Entgegenhaltungen:
- US-A- 4 481 409
- US-A1- 2002 157 542
- US-A1- 2014 348 987
- US-A1- 2015 150 402
- US-A1- 2017 273 508

## Beschreibung

Die Erfindung betrifft eine Küchenmaschine und ein Verfahren zur Durchführung eines Dampfgar-Prozesses eines Nahrungsmittels.

Eine Küchenmaschine kann einen Behälter zur Aufnahme von Wasser aufweisen. Auf den Behälter kann ggf. ein Dampfgar-Aufsatz aufgesetzt werden, der zum Dämpfen eines in den Dampfgar-Aufsatz eingelegten Nahrungsmittels verwendet werden kann. Die Küchenmaschine kann ein Heizelement aufweisen, das eingerichtet ist, Wasser in dem Behälter zu erhitzen, um Dampf für den Dampfgar-Aufsatz zu erzeugen. US 2002/157542 A1 beschreibt ein Dampfgargerät mit reduziertem Ausstoß von Dampf. US 2014/348987 A1 beschreibt ein Gerät zum Kochen mit reduziertem Druck. US 2015/150402 A1 beschreibt ein Dampfgargerät. US 2017/273508 A1 beschreibt eine Küchenmaschine mit einem Dampfgar-Aufsatz.

Das vorliegende Dokument befasst sich mit der technischen Aufgabe, die Güte eines Dampfgar-Prozesses, der mit einer Küchenmaschine durchgeführt wird, zu erhöhen.

Die Aufgabe wird jeweils durch den Gegenstand der unabhängigen Patentansprüche gelöst. Vorteilhafte Ausführungsformen sind insbesondere in den abhängigen Patentansprüchen definiert, in nachfolgender Beschreibung beschrieben oder in der beigefügten Zeichnung dargestellt.

Gemäß einem Aspekt der Erfindung wird eine Küchenmaschine zum Dampfgaren eines Nahrungsmittels beschrieben. Die Küchenmaschine kann ausgebildet sein, um auf eine Arbeitsplatte einer Küche gestellt zu werden. Die Küchenmaschine umfasst einen Behälter zur Aufnahme einer Flüssigkeit (insbesondere von Wasser). Des Weiteren umfasst die Küchenmaschine ein Heizelement (z.B. mit ein oder mehreren HeizWiderständen), das eingerichtet ist, die Flüssigkeit in dem Behälter zu erhitzen, um Flüssigkeits-Dampf zu erzeugen. Außerdem umfasst die Küchenmaschine einen Temperatursensor, der eingerichtet ist, Temperaturdaten in Bezug auf die Temperatur der Flüssigkeit zu erfassen. Der Temperatursensor kann z.B. einen temperaturabhängigen elektrischen Widerstand und/oder einen Infrarot-Sensor umfassen.

Die Küchenmaschine umfasst ferner einen Dampfgar-Aufsatz für ein Nahrungsmittel, wobei der Dampfgar-Aufsatz ausgebildet ist, auf den Behälter aufgesetzt zu werden und Dampf aus dem Behälter aufzunehmen. Der Dampfgar-Aufsatz kann z.B. an der (dem Behälter zugewandten) Unterseite ein oder mehrere Öffnungen (z.B. ein Sieb mit Öffnungen) aufweisen, durch die der Dampf aus dem Behälter in den Dampfgar-Aufsatz gelangen kann. Der Dampfgar-Aufsatz kann einen ansonsten abgeschlossenen Raum zur Aufnahme des Nahrungsmittels bilden. Das Fassungsvermögen des Dampfgar-Aufsatzes kann z.B. 2 Liter oder mehr, oder 5 Liter oder mehr sein (z.B. zwischen 2 und 10 Litern). Der Dampfgar-Aufsatz kann ausgebildet sein, einen Dampfgar-Prozess bei Umgebungsdruck zu ermöglichen.

Außerdem umfasst die Küchenmaschine eine Steuereinheit, die eingerichtet ist, insbesondere zu Beginn eines Dampfgar-Prozesses, auf Basis der Temperaturdaten zu bestimmen, dass die Temperatur der Flüssigkeit einen Temperatur-Schwellenwert erreicht oder überschritten hat. Dabei kann der Temperatur-Schwellenwert z.B. zwischen 85% und 100% der Siedetemperatur der Flüssigkeit liegen. Der Temperatur-Schwellenwert kann derart hoch sein, dass bei dem Temperatur-Schwellenwert bereits ein signifikanter Volumenstrom an Dampf generiert wird.

Die Steuereinheit eingerichtet ist, zu Beginn eines Dampfgar-Prozesses, in einer ersten Phase (vor Erreichen des Temperatur-Schwellenwertes) das Heizelement mit einer ersten (relativ hohen) Heizleitung zu betreiben, um die Temperatur der Flüssigkeit (möglichst schnell) auf den Temperatur-Schwellenwert zu erhitzen. Alternativ oder ergänzend kann die Steuereinheit eingerichtet sein, zu Beginn eines Dampfgar-Prozesses (vor Erreichen des Temperatur-Schwellenwertes), das Heizelement in Abhängigkeit von den Temperaturdaten zu betreiben, um die Temperatur der Flüssigkeit reguliert bis auf den Temperatur-Schwellenwert zu erhitzen. Dabei kann die Temperatur derart reguliert werden, dass der Temperaturanstieg einem bestimmten zeitlichen Soll-Temperaturverlauf folgt. So kann erreicht werden, dass möglichst schnell mit dem eigentlichen Dampfgaren des Nahrungsmittels begonnen werden kann.

Des Weiteren ist die Steuereinheit eingerichtet, in Reaktion auf das Erkennen, dass der Temperatur-Schwellenwert erreicht oder ggf. überschritten wurde, (in einer zweiten Phase) das Heizelement für (ggf. genau) eine Auffüll-Zeitdauer mit der ersten Heizleistung zu betreiben. Dabei ist die erste Heizleistung bevorzugt die maximal mögliche Heizleistung des Heizelements. Es kann somit (direkt nach Beginn der Erzeugung einer signifikanten Menge an Dampf in dem Behälter) für eine definierte Auffüll-Zeitdauer bewirkt werden, dass die Flüssigkeit weiterhin möglichst viel Dampf erzeugt, um den Dampfgar-Aufsatz möglichst schnell vollständig mit Dampf zu füllen. So kann die Oxidation des Nahrungsmittels in dem Dampfgar-Aufsatz (aufgrund von verbliebender Luft in dem Dampfgar-Aufsatz) reduziert werden.

Die Steuereinheit ist ferner ausgebildet, (ggf. direkt) nach Ablauf der Auffüll-Zeitdauer (in einer dritten Phase) das Heizelement mit einer reduzierten zweiten Heizleistung zu betreiben. So kann in energieeffizienter Weise und ohne eine überhöhte Dampfentwicklung der Dampfgar-Prozess des Nahrungsmittels durchgeführt werden.

Die Küchenmaschine ist somit ausgebildet, in energieeffizienter und komfortabler Weise einen Dampfgar-Prozess mit hoher Qualität bereitzustellen. Dabei kann insbesondere in energieeffizienter Weise das Ausmaß der Oxidation eines Nahrungsmittels reduziert werden.

Die Auffüll-Zeitdauer ist bevorzugt derart lang, dass während der Auffüll-Zeitdauer der Dampfgar-Aufsatz vollständig mit Dampf aus dem Behälter gefüllt wird. Andererseits ist die Auffüll-Zeitdauer bevorzugt möglichst kurz, um den Energieverbrauch zu reduzieren und um eine übermäßige Entwicklung von Dampf zu vermeiden. Die Auffüll-Zeitdauer kann im Vorfeld experimentell bestimmt werden. Die Auffüll-Zeit kann z.B. zwischen 2 Minuten und 5 Minuten (z.B. bei 3 Minuten) liegen.

Der Dampfgar-Aufsatz kann ein bestimmtes Fassungsvermögen an Dampf aufweisen. Die Auffüll-Zeitdauer kann z.B. (genau) derart lang sein, dass während der Auffüll-Zeitdauer innerhalb des Behälters ein Volumen an Dampf erzeugt wird, das K mal dem Fassungsvermögen des Dampfgar-Aufsatzes entspricht. Dabei kann K z.B. zwischen 1 und 10 liegen.

Die Steuereinheit kann eingerichtet sein, Mengeninformation in Bezug auf die Menge an Flüssigkeit zu ermitteln, die sich in dem Behälter befindet. Die Mengeninformation kann z.B. automatisch auf Basis der Gewichtsdaten eines Gewichtssensors der Küchenmaschine ermittelt werden. Alternativ oder ergänzend kann die Mengeninformation auf Basis einer Nutzereingabe an einer Benutzerschnittstelle der Küchenmaschine ermittelt werden.

Des Weiteren kann die Steuereinheit eingerichtet sein, die Auffüll-Zeitdauer in Abhängigkeit von der Mengeninformation anzupassen, insbesondere derart, dass die Auffüll-Zeitdauer mit steigender Menge an Flüssigkeit verlängert wird. Außerdem kann die Steuereinheit eingerichtet ist, die Auffüll-Zeitdauer in Abhängigkeit von Kenndaten anzupassen, wobei die Kenndaten für unterschiedliche Mengen an Flüssigkeiten unterschiedliche Werte der Auffüll-Zeitdauer anzeigen. Die Kenndaten können im Vorfeld experimentell ermittelt worden sein und ggf. auf einer Speichereinheit der Küchenmaschine gespeichert worden sein. Durch die Anpassung der Auffüll-Zeitdauer an die Menge der verwendeten Flüssigkeit kann die Güte eines Dampfgar-Prozesses weiter erhöht werden. Dabei wird durch die Verwendung von (vorbestimmten) Kenndaten eine präzise und effiziente Anpassung der Auffüll-Zeitdauer ermöglicht.

Wie bereits oben dargelegt, kann die Küchenmaschine einen Gewichtssensor umfassen, der eingerichtet ist, Gewichtsdaten in Bezug auf das Gewicht des Behälters zu erfassen. Aus den Gewichtsdaten kann z.B. die Menge an Flüssigkeit in dem Behälter und/oder das Gewicht des Nahrungsmittels ermittelt werden. Die Steuereinheit kann eingerichtet sein, das Heizelement in Abhängigkeit von den Gewichtsdaten (insbesondere in Abhängigkeit von der Menge an Flüssigkeit in dem Behälter und/oder in Abhängigkeit von dem Gewicht des Nahrungsmittels) zu betreiben. So kann die Güte eines Dampfgar-Prozesses weiter erhöht werden.

Insbesondere kann die Steuereinheit eingerichtet sein, auf Basis der Gewichtsdaten die Menge an Flüssigkeit zu ermitteln, die sich in dem Behälter befindet. Die Auffüll-Zeitdauer und/oder die zweite Heizleistung können dann in Abhängigkeit von der ermittelten Menge an Flüssigkeit angepasst werden, um die Güte des Dampfgar-Prozesses zu erhöhen.

Alternativ oder ergänzend kann die Steuereinheit eingerichtet sein, auf Basis der Gewichtsdaten das Gewicht des Nahrungsmittels zu ermitteln. Die zweite Heizleistung kann dann in Abhängigkeit von dem ermittelten Gewicht des Nahrungsmittels angepasst werden, um die Güte des Dampfgar-Prozesses zu erhöhen.

Wie bereits oben dargelegt, kann die Küchenmaschine eine Benutzerschnittstelle (z.B. mit einem berührungsempfindlichen Bildschirm) umfassen. Die Steuereinheit kann eingerichtet sein, einen Nutzer der Küchenmaschine über die Benutzerschnittstelle aufzufordern, in einem ersten Schritt die Flüssigkeit in den Behälter zu füllen, und (erst) in einem nachfolgenden zweiten Schritt den Dampfgar-Aufsatz auf den Behälter aufzusetzen. Des Weiteren kann die Steuereinheit eingerichtet sein, im Anschluss an den ersten Schritt (und vor dem zweiten Schritt) erste Gewichtsdaten zu erfassen, um die Menge an Flüssigkeit in dem Behälter zu ermitteln. Alternativ oder ergänzend kann die Steuereinheit eingerichtet sein, im Anschluss an den zweiten Schritt zweite Gewichtsdaten zu erfassen, um das Gewicht des Nahrungsmittels zu ermitteln. So können die Menge an Flüssigkeit und/oder das Gewicht des Nahrungsmittels in präziser und zuverlässiger Weise ermittelt werden, um einen Dampfgar-Prozess mit erhöhter Güte zu ermöglichen.

Die Steuereinheit kann eingerichtet sein, Rezeptdaten in Bezug auf das Nahrungsmittel zu ermitteln. Insbesondere kann die Steuereinheit eingerichtet sein, einen Nutzer über die Benutzerschnittstelle auf Basis der Rezeptdaten bei der Herstellung des Nahrungsmittels zu unterstützen. Des Weiteren kann die Steuereinheit eingerichtet sein, auf Basis der Rezeptdaten einen Typ des Nahrungsmittels zu ermitteln und das Heizelement während des Dampfgar-Prozesses in Abhängigkeit von dem Typ des Nahrungsmittels zu betreiben. Durch die Berücksichtigung des Typs des Nahrungsmittels kann die Güte des Dampfgar-Prozesses weiter erhöht werden.

Gemäß einem weiteren Aspekt der Erfindung wird ein Verfahren zum Dampfgaren eines Nahrungsmittels beschrieben. Dabei ist das Nahrungsmittel in einem Dampfgar-Aufsatz oberhalb eines mit einer Flüssigkeit befüllten Behälters angeordnet. Das Verfahren umfasst, insbesondere zu Beginn eines Dampfgar-Prozesses, das Erfassen von Temperaturdaten in Bezug auf die Temperatur der Flüssigkeit. Des Weiteren umfasst das Verfahren das Bestimmen und/oder das Detektieren, auf Basis der Temperaturdaten, dass die Temperatur der Flüssigkeit einen Temperatur-Schwellenwert erreicht (oder ggf. überschritten) hat. Außerdem umfasst das Verfahren, in Reaktion darauf, das Betreiben eines Heizelements zum Erhitzen der Flüssigkeit für eine Auffüll-Zeitdauer mit einer ersten Heizleistung, und nach Ablauf der Auffüll-Zeitdauer, das Betreiben des Heizelements mit einer reduzierten zweiten Heizleistung.

Es ist zu beachten, dass jegliche Aspekte des in diesem Dokument beschriebenen Verfahrens und/oder der beschriebenen Küchenmaschine in vielfältiger Weise miteinander kombiniert werden können. Insbesondere können die Merkmale der Patentansprüche in vielfältiger Weise miteinander kombiniert werden.

Im Weiteren wird die Erfindung anhand von in der beigefügten Zeichnung dargestellten Ausführungsbeispielen näher beschrieben. Dabei zeigen
- Figur 1a: ein Blockdiagramm einer Küchenmaschine;
- Figur 1b: eine Küchenmaschine in einer perspektivischen Ansicht;
- Figur 2: einen beispielhaften zeitlichen Verlauf der Temperatur der Flüssigkeit und der Heizleistung während eines Dampfgar-Prozesses; und
- Figur 3: ein Ablaufdiagramm eines beispielhaften Verfahrens zur Steuerung eines Dampfgar-Prozesses.

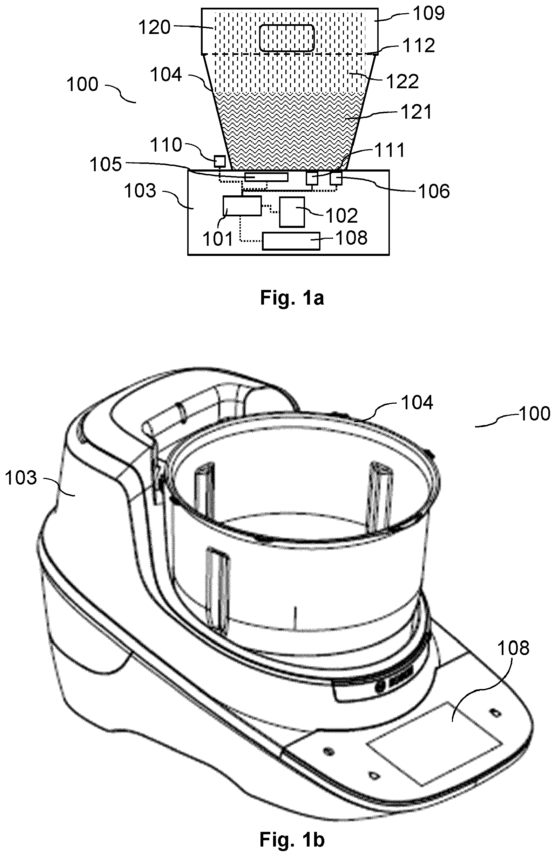

Wie eingangs dargelegt, befasst sich das vorliegende Dokument damit, die Qualität eines durch Dampfgaren hergestellten Nahrungsmittels zu erhöhen. In diesem Zusammenhang zeigt Fig. 1a eine beispielhafte Küchenmaschine 100 mit einer Basis 103. Die in Fig. 1a dargestellte Küchenmaschine 100 umfasst einen Behälter 104, in dem Zutaten für ein herzustellendes Nahrungsmittel verarbeitet werden können, z.B. mittels eines Werkzeugs bzw. Einsatzes (nicht dargestellt), das bzw. der ggf. durch einen Motor 102 angetrieben wird. Dabei können ggf. unterschiedliche Werkzeuge (z.B. ein Messer, ein Knethaken oder ein Besen) an dem Motor 102 montiert werden. Die Küchenmaschine 100 kann eingerichtet sein, den Behälter 104 mittels einer Heizeinheit 105 zu erwärmen bzw. zu erhitzen.

Des Weiteren kann die Küchenmaschine 100 ein oder mehrere Sensoren 106, 111 umfassen, die eingerichtet sind, Sensordaten in Bezug auf die Küchenmaschine 100 (insbesondere in Bezug auf einen Zustand der Küchenmaschine 100) und/oder in Bezug auf das herzustellende Nahrungsmittel zu erfassen. Ein beispielhafter Sensor ist ein Temperatursensor 111, der eingerichtet ist, Temperaturdaten in Bezug auf die Temperatur des Behälters 104 und/oder des darin enthaltenen Nahrungsmittels zu erfassen. Der Temperatursensor 111 kann einen temperaturabhängigen Messwiderstand umfassen. Ein weiterer beispielhafter Sensor 106 ist ein Gewichtssensor bzw. eine Waage, der bzw. die eingerichtet ist, Gewichtsdaten in Bezug auf das Gewicht des Behälters 104 und/oder des darin enthaltenen Nahrungsmittels zu erfassen.

Der Temperatursensor 111 kann an der Unterseite des Behälters 104 angeordnet sein, Ferner kann die Küchenmaschine 100 einen an einer Seitenwand des Behälters 104 angeordneten Infrarot-Sensor 110 umfassen, der eingerichtet ist, Sensordaten in Bezug auf die Infrarot-Strahlung der Seitenwand des Behälters 104 zu erfassen. Auf Basis der Sensordaten kann in präziser Weise die Temperatur des Inhalts des Behälters 104 ermittelt werden.

Außerdem kann die Küchenmaschine 100 eine Benutzerschnittstelle 108 umfassen, die es einem Nutzer ermöglicht, Steuereingaben an die Küchenmaschine 100 zu tätigen (z.B. über ein oder mehrere Knöpfe), und/oder die es der Küchenmaschine 100 ermöglicht, Rückmeldungen an einen Nutzer der Küchenmaschine 100 auszugeben (z.B. über einen Bildschirm und/oder über eine Anzeige). Insbesondere kann die Benutzerschnittstelle 108 dazu genutzt werden, Information in Bezug auf Arbeitsschritte eines Rezeptes zur Herstellung eines bestimmten Nahrungsmittels an einen Nutzer auszugeben.

Des Weiteren umfasst die Küchenmaschine 100 eine Steuereinheit 101, die eingerichtet sein kann, Rezeptdaten für ein Rezept zur Herstellung eines bestimmten Nahrungsmittels zu ermitteln (z.B. aus einer Speichereinheit der Küchenmaschine 100 auszulesen oder von einer Datenbank herunterzuladen). Ferner kann die Steuereinheit 101 eingerichtet sein, die Küchenmaschine 100 zumindest teilweise automatisch in Abhängigkeit von den Rezeptdaten zu betreiben, um den Nutzer bei der Herstellung des bestimmten Nahrungsmittels zu unterstützen.

Fig. 1b zeigt eine beispielhafte Küchenmaschine 100 in einer perspektivischen Ansicht.

Die Küchenmaschine 100 umfasst eine Dampfgar-Aufsatz 109, der auf den Behälters 104 aufgesetzt werden kann, so dass Dampf 122 (insbesondere Wasserdampf) aus dem Behälter 104 durch Öffnungen 112 (z.B. durch ein Sieb) an der Unterseite des Aufsatzes 109 in den Dampfgar-Aufsatz 109 gelangen kann. Der Dampfgar-Aufsatz 109 ist typischerweise (abgesehen von den ein oder mehreren Öffnungen 112 an der dem Behälter 104 zugewandten Unterseite) verschlossen, so dass sich innerhalb des Dampfgar-Aufsatzes 109 eine Atmosphäre mit Dampf 122 bildet. In dem Dampfgar-Aufsatz 109 kann ein Nahrungsmittel 120 unter Einwirkung des Dampfes 122 gegart werden.

Der Behälter 104 kann zum Dampfgaren mit einer Flüssigkeit 121, insbesondere Wasser, befüllt werden. Die Flüssigkeit 121 kann durch die Heizeinheit bzw. durch das Heizelement 105 der Küchenmaschine 100 aufgeheizt werden (insbesondere bis zum Siedepunkt der Flüssigkeit 121), so dass Dampf 122 entsteht und in den Dampfgar-Aufsatz 109 aufsteigt.

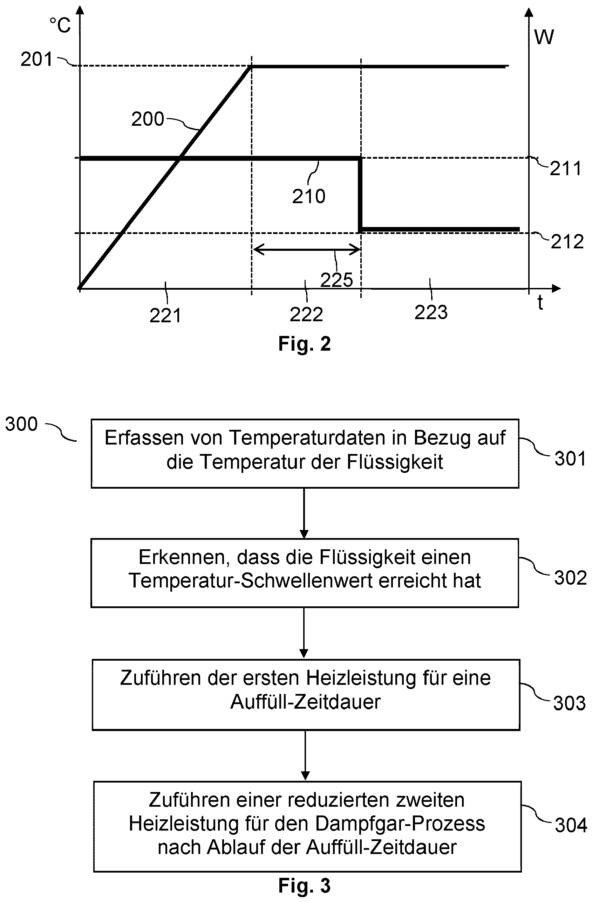

Um die Qualität des Dampfgar-Prozesses zu erhöhen, ist es vorteilhaft, dass der Dampfgar-Aufsatz 109 innerhalb eines möglichst kurzen Zeitraums vollständig mit Dampf 122 gefüllt wird. Zu diesem Zweck kann das Heizelement 105 in einer ersten Phase 221 des Dampfgar-Prozesses (siehe Fig. 2) mit einer relativ hohen ersten Heizleistung 211 (z.B. mit einer Maximalleistung bzw. mit 100% der verfügbaren Heizleistung) betrieben werden. Als Folge daraus wird die Flüssigkeit 121 in dem Behälter 104 relativ schnell erhitzt und/oder zum Sieden gebracht.

Die Steuereinheit 101 der Küchenmaschine 100 ist eingerichtet, auf Basis der Temperaturdaten des Temperatursensors 111 und/oder auf Basis der Sensordaten des IR-Sensors 110 zu detektieren, dass die Temperatur der Flüssigkeit 121 einen bestimmten Temperatur-Schwellenwert 201 erreicht hat. Der Temperatur-Schwellenwert 201 kann z.B. in einem Bereich zwischen 15% und 0% unterhalb der Siedetemperatur der Flüssigkeit 121 in dem Behälter 104 liegen.

Sobald die Temperatur der Flüssigkeit 121 den Temperatur-Schwellenwert 201 erreicht hat, kann das Heizelement 105 in einer zweiten Phase 222 des Dampfgar-Prozesses für eine definierte Auffüll-Zeitdauer 225 weiterhin mit der ersten Heizleistung 211 betrieben werden. So kann erreicht werden, dass der Dampfgar-Aufsatz 109 möglichst schnell vollständig mit Dampf 122 gefüllt wird (und dabei die oxidierende Luft aus dem Dampfgar-Aufsatz 109 vollständig verdrängt wird).

(Direkt) nach Ablauf der Auffüll-Zeitdauer 225 kann das Heizelement 105 in einer dritten Phase 223 des Dampfgar-Prozesses mit einer (gegenüber der ersten Heizleistung 211 reduzierten) zweiten Heizleistung 212 betrieben werden, um das Nahrungsmittel 120 zu dämpfen. Die zweite Heizleistung 212 kann dabei ausreichend hoch sein, um einen bestimmten Massen- bzw. Volumenstrom an Dampf 122 in den Dampfgar-Aufsatz 109 zu bewirken, durch den ein bestimmtes Niveau an Dampfmasse bzw. Dampfvolumen in dem Dampfgar-Aufsatz 109 aufrechterhalten bleibt.

In der ersten und/oder der zweiten Phase 221, 222 kann eine Temperaturregulierung der Temperatur der Flüssigkeit 121 in dem Behälter 104 erfolgen. Insbesondere kann die Heizleistung des Heizelements 105 derart eingestellt und/oder angepasst werden, dass die Temperatur einen bestimmten Soll-Temperaturverlauf 200 aufweist (wie z.B. in Fig. 2 dargestellt). Fig. 2 zeigt außerdem den zeitlichen Verlauf 210 der Heizleistung (gemessen in W(att)) in den unterschiedlichen Phasen 221, 222, 223 des (Beginns des) Dampfgar-Prozesses.

Die Steuereinheit 101 kann eingerichtet sein, auf Basis der erfassten Gewichtsdaten des Gewichtssensors 106 der Küchenmaschine 100 die Menge an Flüssigkeit 121 (insbesondere an Wasser) zu ermitteln, die sich in dem Behälter 105 befindet. Typischerweise füllt ein Nutzer der Küchenmaschine 100 zunächst Flüssigkeit 121 in den Behälter 104, und setzt daraufhin den Behälter 104 auf die Basis 103 der Küchenmaschine 100. An diesem Zeitpunkt zeigen die Gewichtsdaten des Gewichtssensors 106 in präziser Weise allein das durch die Flüssigkeit 121 bewirkte Gewicht an. In einem zweiten Schritt setzt der Nutzer typischerweise den Dampfgar-Aufsatz 109 mit dem Nahrungsmittel 120 auf den Behälter 104. An diesem Zweitpunkt zeigen die Gewichtdaten des Gewichtssensors 106 die Summe des Gewichts der Flüssigkeit 121 und des Nahrungsmittels 120 an. Durch Abziehen des zuvor ermittelten Gewichts der Flüssigkeit 121 kann dann in präziser weise das Gewicht des Nahrungsmittels 120 ermittelt werden.

Um zu gewährleisten, dass der Nutzer der Küchenmaschine 100, wie oben dargelegt, in einem ersten Schritt den Behälter 104 mit Flüssigkeit 121 füllt (um auf Basis der Gewichtdaten in präziser Weise die Menge an Flüssigkeit 121 zu ermitteln), und in einem nachfolgenden zweiten Schritt den Dampfgar-Aufsatz 109 mit dem Nahrungsmittel 120 aufsetzt (um auf Basis der Gewichtsdaten das Gewicht des Nahrungsmittels 120 zu ermitteln), kann der Nutzer über die Benutzerschnittstelle 108 der Küchenmaschine 100 dazu aufgefordert werden.

Auf Basis der Gewichtsdaten kann somit in präziser Weise die Menge an Flüssigkeit 121 und/oder das Gewicht des Nahrungsmittels 120 ermittelt werden. Des Weiteren kann ggf. der Typ des Nahrungsmittels 120 ermittelt werden (z.B. auf Basis einer Nutzereingabe über die Benutzerschnittstelle 108 und/oder auf Basis der Rezeptdaten für ein Rezept, das auf der Küchenmaschine 100 ausgeführt wird).

Das Heizelement 105 der Küchenmaschine 100 kann automatisch in Abhängigkeit von den Gewichtsdaten, insbesondere in Abhängigkeit von
- der ermittelten Menge an Flüssigkeit 121; und/oder
- dem Typ und/oder dem Gewicht des Nahrungsmittels 120,
betrieben werden. Insbesondere können die Auffüll-Zeitdauer 225 und/oder die zweite Heizleistung 212 in Abhängigkeit von den Gewichtsdaten angepasst und/oder eingestellt werden.

Typischerweise steigt mit steigender Menge an Flüssigkeit 121 die Auffüll-Zeitdauer 225 an, die erforderlich ist, um den Dampfgar-Aufsatz 109 vollständig mit Dampf 122 zu füllen. Die Steuereinheit 101 kann eingerichtet sein (z.B. anhand von Kenndaten, die im Vorfeld experimentell ermittelt wurden), auf Basis der Gewichtsdaten die Menge an Flüssigkeit 121 zu ermitteln, und basierend darauf (unter Berücksichtigung der Kenndaten) die erforderliche Auffüll-Zeitdauer 225 zu ermitteln.

Alternativ oder ergänzend kann die Steuereinheit 101 eingerichtet sein, die zweite Heizleistung 212 zum Dampfgaren des Nahrungsmittels 120 in Abhängigkeit von dem ermittelten Typ des Nahrungsmittels 120 und/oder in Abhängigkeit von dem ermittelten Gewicht des Nahrungsmittels 120 anzupassen (insbesondere zu erhöhen oder zu reduzieren).

Die Steuereinheit 101 kann eingerichtet sein, insbesondere innerhalb der dritten Phase 223 eines Dampfgar-Prozesses, die Heizleistung 212 dynamisch anzupassen (z.B. in Abhängigkeit von den Rezeptdaten, und/oder in Abhängigkeit von dem Typ und/oder dem Gewicht des Nahrungsmittels 120). So kann die Güte eines gegarten Nahrungsmittels 120 weiter erhöht werden.

Fig. 3 zeigt ein Ablaufdiagramm eines beispielhaften Verfahrens 300 zum Dampfgaren eines Nahrungsmittels 120. Dabei ist das Nahrungsmittel 120 in einem Dampfgar-Aufsatz 109 oberhalb eines mit einer Flüssigkeit 121 (insbesondere mit Wasser) befüllten Behälters 104 angeordnet. Das Verfahren 200 kann durch einen Dampfgarer und/oder durch eine Küchenmaschine 100 ausgeführt werden.

Das Verfahren 300 umfasst, insbesondere zu Beginn eines Dampfgar-Prozesses, das Erfassen 301 von Temperaturdaten in Bezug auf die Temperatur der Flüssigkeit 121. Die Temperaturdaten können z.B. mittels eines Widerstands- und/oder IR-basierten Sensors 110, 111 erfasst werden.

Das Verfahren 300 umfasst ferner das Bestimmen und/oder das Detektieren 302, auf Basis der Temperaturdaten, dass die Temperatur der Flüssigkeit 121 einen Temperatur-Schwellenwert 201 erreicht oder überschritten hat. Der Temperatur-Schwellenwert 201 kann dabei derart sein, dass die Flüssigkeit 121 bei dem Temperatur-Schwellenwert 201 eine substantielle Menge an Dampf 122 erzeugt. Der Temperatur-Schwellenwert 201 kann z.B. zwischen 85% oder 90% und 95% oder 100% der Siedetemperatur der Flüssigkeit 121 liegen (z.B. zwischen 90°C und 98°C bei Wasser).

Des Weiteren umfasst das Verfahren 300, in Reaktion darauf, das Betreiben 303 eines Heizelements 105 zum Erhitzen der Flüssigkeit 121 für (genau) eine Auffüll-Zeitdauer 225 mit einer ersten Heizleistung 211. Die erste Heizleistung 211 kann dabei relativ hoch sein. Insbesondere kann die erste Heizleistung 211 der maximal möglichen Heizleistung des Heizelements 105 entsprechen.

Außerdem umfasst das Verfahren 300, (direkt) nach Ablauf der Auffüll-Zeitdauer 225, das Betreiben 304 des Heizelements 105 mit einer reduzierten zweiten Heizleistung 212. Die zweite Heizleistung 212 kann dabei um 30% oder mehr, oder um 40% oder mehr, oder um 50% oder mehr unterhalb der ersten Heizleistung 212 liegen. Die zweite Heizleistung 212 kann derart sein, dass durch die zweite Heizleistung 212 ein ausreichend hoher Volumenstrom an Dampf 122 erzeugt wird, um dem Dampfgar-Prozess durchzuführen. Durch die in diesem Dokument beschriebenen Maßnahmen kann bewirkt werden, dass der Dampfgar-Aufsatz 109 einer Küchenmaschine 100 in energieeffizienter Weise innerhalb eines möglichst kurzen Zeitraums vollständig mit Dampf 122 gefüllt wird. So können die Luft und insbesondere der darin enthaltene Sauerstoff möglichst schnell aus dem Dampfgar-Aufsatz 109 ausgetrieben werden, so dass das Ausmaß an Oxidation des Nahrungsmittels 120 reduziert und damit die Qualität des gegarten Nahrungsmittels 120 erhöht werden. Des Weiteren können durch eine Begrenzung der Auffüll-Zeitdauer 225 und durch eine anschließende Reduzierung der Heizleistung der Energieverbrauch der Küchenmaschine 100 und das Ausmaß an Dampfentwicklung in der Umgebung der Küchenmaschine 100 (z.B. in einer Küche) reduziert werden.

Die vorliegende Erfindung ist nicht auf die gezeigten Ausführungsbeispiele beschränkt, der Schutzumfang wird durch die Ansprüche bestimmt. Insbesondere ist zu beachten, dass die Beschreibung und die Figuren nur das Prinzip der vorgeschlagenen Küchenmaschine und/oder des vorgeschlagenen Verfahrens veranschaulichen sollen.

## Patentansprüche

1. Küchenmaschine (100) zum Dampfgaren eines Nahrungsmittels (120), wobei die Küchenmaschine (100) umfasst,
- einen Behälter (104) zur Aufnahme einer Flüssigkeit (121);
- einen Gewichtssensor (106), der eingerichtet ist, Gewichtsdaten in Bezug auf ein Gewicht des Behälters (104) zu erfassen;
- ein Heizelement (105), das eingerichtet ist, die Flüssigkeit (121) in dem Behälter (104) zu erhitzen, um Flüssigkeits-Dampf (122) zu erzeugen;
- einen Temperatursensor (110, 111), der eingerichtet ist, Temperaturdaten in Bezug auf eine Temperatur der Flüssigkeit (121) zu erfassen;
- einen Dampfgar-Aufsatz (109) für ein Nahrungsmittel (120), der ausgebildet ist, auf den Behälter (104) aufgesetzt zu werden und Dampf (122) aus dem Behälter (104) aufzunehmen; und
- eine Steuereinheit (101), die eingerichtet ist, zu Beginn eines Dampfgar-Prozesses,
- auf Basis der Temperaturdaten zu bestimmen, dass die Temperatur der Flüssigkeit (121) einen Temperatur-Schwellenwert (201) erreicht oder überschritten hat;
- in Reaktion darauf, das Heizelement (105) für eine Auffüll-Zeitdauer (225) mit einer ersten Heizleistung (211) zu betreiben; und
- nach Ablauf der Auffüll-Zeitdauer (225) das Heizelement (105) mit einer reduzierten zweiten Heizleistung (212) zu betreiben; wobei das Heizelement (105) in Abhängigkeit von den Gewichtsdaten des Gewichtssensors (106) betrieben wird.

2. Küchenmaschine (100) gemäß Anspruch 1, wobei der Temperatur-Schwellenwert (201) zwischen 85% und 100% einer Siedetemperatur der Flüssigkeit (121) liegt.

3. Küchenmaschine (100) gemäß einem der vorhergehenden Ansprüche, wobei die erste Heizleistung (211) eine maximal mögliche Heizleistung des Heizelements (105) ist.

4. Küchenmaschine (100) gemäß einem der vorhergehenden Ansprüche, wobei
- der Dampfgar-Aufsatz (109) ein bestimmtes Fassungsvermögen an Dampf (122) aufweist; und
- die Auffüll-Zeitdauer (225) derart lang ist, dass während der Auffüll-Zeitdauer (225) innerhalb des Behälters (104) ein Volumen an Dampf (122) erzeugt wird, das K mal dem Fassungsvermögen des Dampfgar-Aufsatzes (109) entspricht; und
- K zwischen 1 und 10 ist.

5. Küchenmaschine (100) gemäß einem der vorhergehenden Ansprüche, wobei die Auffüll-Zeitdauer (225) derart lang ist, dass während der Auffüll-Zeitdauer (225) der Dampfgar-Aufsatz (109) vollständig mit Dampf (122) aus dem Behälter (104) gefüllt wird.

6. Küchenmaschine (100) gemäß einem der vorhergehenden Ansprüche, wobei die Steuereinheit (101) eingerichtet ist, zu Beginn eines Dampfgar-Prozesses, in einer ersten Phase (221) das Heizelement (105) mit der ersten Heizleitung (211) zu betreiben, um die Temperatur der Flüssigkeit (121) auf den Temperatur-Schwellenwert (201) zu erhitzen.

7. Küchenmaschine (100) gemäß einem der vorhergehenden Ansprüche, wobei die Steuereinheit (101) eingerichtet ist, zu Beginn eines Dampfgar-Prozesses, das Heizelement (105) in Abhängigkeit von den Temperaturdaten zu betreiben, um die Temperatur der Flüssigkeit (121) reguliert bis auf den Temperatur-Schwellenwert (201) zu erhitzen.

8. Küchenmaschine (100) gemäß einem der vorhergehenden Ansprüche, wobei die Steuereinheit (101) eingerichtet ist,
- Mengeninformation in Bezug auf eine Menge an Flüssigkeit (121) zu ermitteln, die sich in dem Behälter (104) befindet; und
- die Auffüll-Zeitdauer (225) in Abhängigkeit von der Mengeninformation anzupassen, insbesondere derart, dass die Auffüll-Zeitdauer (225) mit steigender Menge an Flüssigkeit (121) verlängert wird.

9. Küchenmaschine (100) gemäß Anspruch 8, wobei
- die Steuereinheit (101) eingerichtet ist, die Auffüll-Zeitdauer (225) in Abhängigkeit von Kenndaten anzupassen; und
- die Kenndaten für unterschiedliche Mengen an Flüssigkeiten (121) unterschiedliche Werte der Auffüll-Zeitdauer (225) anzeigen.

10. Küchenmaschine (100) gemäß einem der vorhergehenden Ansprüche, wobei die Steuereinheit (101) eingerichtet ist,
- auf Basis der Gewichtsdaten eine Menge an Flüssigkeit (121) zu ermitteln, die sich in dem Behälter (104) befindet; und
- die Auffüll-Zeitdauer (225) und/oder die zweite Heizleistung (212) in Abhängigkeit von der ermittelten Menge an Flüssigkeit (121) anzupassen.

11. Küchenmaschine (100) gemäß einem der vorhergehenden Ansprüche, wobei die Steuereinheit (101) eingerichtet ist,
- auf Basis der Gewichtsdaten ein Gewicht des Nahrungsmittels (120) zu ermitteln; und
- die zweite Heizleistung (212) in Abhängigkeit von dem ermittelten Gewicht des Nahrungsmittels (120) anzupassen.

12. Küchenmaschine (100) gemäß einem der vorhergehenden Ansprüche, wobei
- die Küchenmaschine (100) eine Benutzerschnittstelle (108) umfasst; und
- die Steuereinheit (101) eingerichtet ist,
- einen Nutzer der Küchenmaschine (100) über die Benutzerschnittstelle (108) aufzufordern, in einem ersten Schritt die Flüssigkeit (121) in den Behälter (104) zu füllen, und in einem nachfolgenden zweiten Schritt den Dampfgar-Aufsatz (109) auf den Behälter (104) aufzusetzen; und
- im Anschluss an den ersten Schritt erste Gewichtsdaten zu erfassen, um die Menge an Flüssigkeit (121) in dem Behälter (104) zu ermitteln; und/oder
- im Anschluss an den zweiten Schritt zweite Gewichtsdaten zu erfassen, um das Gewicht des Nahrungsmittels (120) zu ermitteln.

13. Küchenmaschine (100) gemäß einem der vorhergehenden Ansprüche, wobei
- die Küchenmaschine (100) eine Benutzerschnittstelle (108) umfasst; und
- die Steuereinheit (101) eingerichtet ist,
- einen Nutzer über die Benutzerschnittstelle (108) auf Basis von Rezeptdaten bei der Herstellung des Nahrungsmittels (120) zu unterstützen;
- auf Basis der Rezeptdaten einen Typ des Nahrungsmittels (120) zu ermitteln; und
- das Heizelement (105) während des Dampfgar-Prozesses in Abhängigkeit von dem Typ des Nahrungsmittels (120) zu betreiben.

14. Verfahren (300) zum Dampfgaren eines Nahrungsmittels (120), wobei das Nahrungsmittel (120) in einem Dampfgar-Aufsatz (109) oberhalb eines mit einer Flüssigkeit (121) befüllten Behälters (104) angeordnet ist; wobei das Verfahren (300) zu Beginn eines Dampfgar-Prozesses umfasst,
- Erfassen (301) von Temperaturdaten in Bezug auf eine Temperatur der Flüssigkeit (121);
- Erfassen von Gewichtsdaten in Bezug auf ein Gewicht des Behälters (104) mittels eines Gewichtssensors (106);
- Bestimmen (302), auf Basis der Temperaturdaten, dass die Temperatur der Flüssigkeit (121) einen Temperatur-Schwellenwert (201) erreicht oder überschritten hat;
- in Reaktion darauf, Betreiben (303) eines Heizelements (105) zum Erhitzen der Flüssigkeit (121) für eine Auffüll-Zeitdauer (225) mit einer ersten Heizleistung (211); und
- nach Ablauf der Auffüll-Zeitdauer (225), Betreiben (304) des Heizelements (105) mit einer reduzierten zweiten Heizleistung (212); wobei das Heizelement (105) in Abhängigkeit von den Gewichtsdaten des Gewichtssensors (106) betrieben wird.

## Claims

1. Food processor (100) for steam cooking a food product (120), the food processor (100) comprising
- a container (104) for holding a liquid (121);
- a weight sensor (106), which is designed to capture weight data relating to a weight of the container (104);
- a heating element (105), which is designed to heat the liquid (121) in the container (104), to generate liquid vapour (122);
- a temperature sensor (110, 111), which is designed to capture temperature data relating to a temperature of the liquid (121);
- a steam cooking attachment (109) for a food product (120), which is configured to be positioned on the container (104) and to take up steam (122) from the container (104); and
- a control unit (101), which is designed, at the start of a steam cooking process,
- to determine, based on the temperature data, that the temperature of the liquid (121) has reached or exceeded a temperature threshold value (201);
- in response to this, to operate the heating element (105) for a fill-up period (225) at a first heating power (211); and
- after the fill-up period (225) to operate the heating element (105) at a reduced second heating power (212), the heating element (105) being operated as a function of the weight data from the weight sensor (106).

2. Food processor (100) according to claim 1, wherein the temperature threshold value (201) is between 85% and 100% of a boiling temperature of the liquid (121).

3. Food processor (100) according to one of the preceding claims, wherein the first heating power (211) is a maximum possible heating power of the heating element (105).

4. Food processor (100) according to one of the preceding claims, wherein
- the steam cooking attachment (109) has a specific capacity for steam (122); and
- the fill-up period (225) is long enough for a volume of steam (122) to be generated in the container (104) during the fill-up period (225) that is K times the capacity of the steam cooking attachment (109); and
- K is between 1 and 10.

5. Food processor (100) according to one of the preceding claims, wherein the fill-up period (225) is long enough for the steam cooking attachment (109) to be filled completely with steam (122) from the container (104) during the fill-up period (225).

6. Food processor (100) according to one of the preceding claims, wherein the control unit (101) is designed, at the start of a steam cooking process, to operate the heating element (105) at the first heating power (211) in a first phase (221) to heat the temperature of the liquid (121) to the temperature threshold value (201).

7. Food processor (100) according to one of the preceding claims, wherein the control unit (101) is designed, at the start of a steam cooking process, to operate the heating element (105) as a function of the temperature data, to heat the temperature of the liquid (121) to the temperature threshold value (201) in a regulated manner.

8. Food processor (100) according to one of the preceding claims, wherein the control unit (101) is designed
- to determine quantitative information relating to a quantity of liquid (121) present in the container (104); and
- to adjust the fill-up period (225) as a function of the quantitative information, in particular so that the fill-up period (225) lengthens as the quantity of liquid (121) increases.

9. Food processor (100) according to claim 8, wherein
- the control unit (101) is designed to adjust the fill-up period (225) as a function of key data; and
- the key data for different quantities of liquid (121) indicates different values for the fill-up period (225).

10. Food processor (100) according to one of the preceding claims, wherein the control unit (101) is designed
- to determine a quantity of liquid (121) present in the container (104) based on the weight data; and
- to adjust the fill-up period (225) and/or the second heating power (212) as a function of the determined quantity of liquid (121).

11. Food processor (100) according to one of the preceding claims, wherein the control unit (101) is designed
- to determine a weight of the food product (120) based on the weight data; and
- to adjust the second heating power (212) as a function of the determined weight of the food product (120).

12. Food processor (100) according to one of the preceding claims, wherein
- the food processor (100) comprises a user interface (108); and
- the control unit (101) is designed
- to prompt a user of the food processor (100) by way of the user interface (108), in a first step to fill the container (104) with liquid (121) and in a subsequent second step to position the steam cooking attachment (109) on the container (104); and
- to capture first weight data after the first step to determine the quantity of liquid (121) in the container (104); and/or
- to capture second weight data after the second step to determine the weight of the food product (120).

13. Food processor (100) according to one of the preceding claims, wherein
- the food processor (100) comprises a user interface (108); and
- the control unit (101) is designed
- to assist a user in the production of the food product (120) by way of the user interface (108) based on recipe data;
- to determine a type of food product (120) based on the recipe data; and
- to operate the heating element (105) as a function of the type of food product (120) during the steam cooking process.

14. Method (300) for steam cooking a food product (120), wherein the food product (120) is arranged in a steam cooking attachment (109) above a container (104) filled with liquid (121); at the start of a steam cooking process the method (300) comprising
- capturing (301) temperature data relating to a temperature of the liquid (121);
- capturing weight data relating to a weight of the container (104) using a weight sensor (106);
- determining (302), based on the temperature data, that the temperature of the liquid (121) has reached or exceeded a temperature threshold value (201);
- in response to this operation (303) of a heating element (105) to heat the liquid (121) at a first heating power (211) for a fill-up period (225); and
- after the fill-up period (225), operation (304) of the heating element (105) at a reduced second heating power (212), the heating element (105) being operated as a function of the weight data from the weight sensor (106).

## Revendications

1. Robot de cuisine (100) pour la cuisson à la vapeur d'une denrée alimentaire (120), dans lequel le robot de cuisine (100) comprend,
- un récipient (104) pour l'accueil d'un liquide (121) ;
- un capteur de poids (106), aménagé afin de détecter des données de poids en rapport avec un poids du récipient (104) ;
- un élément chauffant (105), aménagé afin de chauffer le liquide (121) dans le récipient (104) pour générer de la vapeur de liquide (122) ;
- un capteur de température (110, 111), aménagé afin de détecter des données de température en rapport avec une température du liquide (121) ;
- un insert de cuisson à la vapeur (109) pour une denrée alimentaire (120), formé afin d'être posé sur le récipient (104) et de recevoir la vapeur (122) venant du récipient (104) ; et
- une unité de commande (101), aménagée, au début d'un processus de cuisson à la vapeur,
- afin d'établir, sur la base des données de température que la température du liquide (121) a atteint ou dépassé une valeur seuil de température (201) ;
- d'exploiter en réaction à cela l'élément chauffant (105) pour une durée de remplissage (225) selon une première puissance de chauffage (211) ; et
- d'exploiter après l'écoulement de la durée de remplissage (225) l'élément chauffant (105) selon une deuxième puissance de chauffage réduite (212) ; dans lequel l'élément chauffant (105) est exploité en fonction des données de poids du capteur de poids (106).

2. Robot de cuisine (100) selon la revendication 1, dans lequel la valeur seuil de température (201) se situe entre 85 % et 100 % d'une température d'ébullition du liquide (121).

3. Robot de cuisine (100) selon l'une des revendications précédentes, dans lequel la première puissance de chauffage (211) est une puissance de chauffage maximale possible de l'élément chauffant (105).

4. Robot de cuisine (100) selon l'une des revendications précédentes, dans lequel
- l'insert de cuisson à la vapeur (109) présente une capacité de vapeur déterminée (122) ; et
- la durée de remplissage (225) est d'une longueur telle qu'un volume de vapeur (122) correspondant à K fois la capacité de l'insert de cuisson à la vapeur (109) est généré à l'intérieur du récipient (104) pendant la durée de remplissage (225) ; et
- K est entre 1 et 10.

5. Robot de cuisine (100) selon l'une des revendications précédentes, dans lequel la durée de remplissage (225) est d'une longueur telle que pendant la durée de remplissage (225) l'insert de cuisson à la vapeur (109) est intégralement rempli de vapeur (122) venant du récipient (104).

6. Robot de cuisine (100) selon l'une des revendications précédentes, dans lequel l'unité de commande (101) est aménagée afin d'exploiter, au début d'un processus de cuisson à la vapeur, dans une première phase (221) l'élément chauffant (105) selon la première puissance de chauffage (211), afin d'échauffer la température du liquide (121) à la valeur seuil de température (201).

7. Robot de cuisine (100) selon l'une des revendications précédentes, dans lequel l'unité de commande (101) est aménagée afin d'exploiter, au début d'un processus de cuisson à la vapeur, l'élément chauffant (105) en fonction des données de température, afin d'échauffer la température du liquide (121) de façon régulée jusqu'à la valeur seuil de température (201).

8. Robot de cuisine (100) selon l'une des revendications précédentes, dans lequel l'unité de commande (101) est aménagée,
- afin de déterminer une information de quantité en rapport avec une quantité de liquide (121) qui se trouve dans le récipient (104) ; et
- d'adapter la durée de remplissage (225) en fonction de l'information de quantité, en particulier de telle sorte que la durée de remplissage (225) soit prolongée en présence d'une quantité de liquide (121) croissante.

9. Robot de cuisine (100) selon la revendication 8, dans lequel
- l'unité de commande (101) est aménagée afin d'adapter la durée de remplissage (225) en fonction de caractéristiques ; et
- les caractéristiques indiquent pour différentes quantités de liquides (121) différentes valeurs de la durée de remplissage (225).

10. Robot de cuisine (100) selon l'une des revendications précédentes, dans lequel l'unité de commande (101) est aménagée,
- afin de déterminer en se fondant sur les données de poids une quantité liquide (121) qui se trouve dans le récipient (104) ; et
- d'adapter la durée de remplissage (225) et/ou la deuxième puissance de chauffage (212) en fonction de la quantité de liquide (121) déterminée.

11. Robot de cuisine (100) selon l'une des revendications précédentes, dans lequel l'unité de commande (101) est aménagée,
- afin de déterminer sur la base des données de poids un poids de la denrée alimentaire (120) ; et
- d'adapter la deuxième puissance de chauffage (212) en fonction du poids de la denrée alimentaire (120) déterminé.

12. Robot de cuisine (100) selon l'une des revendications précédentes, dans lequel
- le robot de cuisine (100) comprend une interface utilisateur (108) ; et
- l'unité de commande (101) est aménagée
- afin d'inviter un utilisateur du robot de cuisine (100) via l'interface utilisateur (108), dans une première étape, à verser le liquide (121) dans le récipient (104) et dans une deuxième étape subséquente, à poser l'insert de cuisson à la vapeur (109) sur le récipient (104) ; et
- de détecter, suite à la première étape, des premières données de poids, afin de déterminer la quantité de liquide (121) dans le récipient (104) ; et/ou
- de détecter, suite à la deuxième étape, des deuxièmes données de poids, afin de déterminer le poids de la denrée alimentaire (120).

13. Robot de cuisine (100) selon l'une des revendications précédentes, dans lequel
- le robot de cuisine (100) comprend une interface utilisateur (108) ; et
- l'unité de commande (101) est aménagée
- afin de soutenir un utilisateur via l'interface utilisateur (108) sur la base de données de recette lors de la préparation de la denrée alimentaire (120) ;
- de déterminer sur la base des données de recette un type de la denrée alimentaire (120) ; et
- d'exploiter l'élément chauffant (105) en fonction du type de la denrée alimentaire (120) durant le processus de cuisson à la vapeur.

14. Procédé (300) pour la cuisson à la vapeur d'une denrée alimentaire (120), dans lequel la denrée alimentaire (120) est disposée dans un insert de cuisson à la vapeur (109) au-dessus d'un récipient (104) rempli d'un liquide (121) ; dans lequel le procédé (300) comprend au début d'un processus de cuisson à la vapeur,
- la détection (301) de données de température en rapport avec une température du liquide (121) ;
- la détection de données de poids en rapport avec un poids du récipient (104) au moyen d'un capteur de poids (106) ;
- l'établissement (302), sur la base des données de température, du fait que la température du liquide (121) a atteint ou dépassé une valeur seuil de température (201) ;
- l'exploitation (303) en réaction à cela d'un élément chauffant (105) pour chauffer le liquide (121) pour une durée de remplissage (225) selon une première puissance de chauffage (211) ; et
- l'exploitation (304), après l'écoulement de la durée de remplissage (225), de l'élément chauffant (105) selon une deuxième puissance de chauffage réduite (212) ; dans lequel l'élément chauffant (105) est exploité en fonction des données de poids du capteur de poids (106).
